# EUROPÄISCHE PATENTSCHRIFT

(11) **EP 1 838 117 B1**
(45) Veröffentlichungstag und Bekanntmachung des Hinweises auf die Patenterteilung: **03.12.2008**
(21) Anmeldenummer: 06006017.5
(22) Anmeldetag: 23.03.2006
(51) Int. Cl.: H04Q 7/36, G01R 29/10, H04Q 7/38

(54) **Verfahren zur Steuerung einer Funkübertragung**
Method for controlling radio transmission
Méthode de gestion d'une transmission de radio

(43) Veröffentlichungstag der Anmeldung: 26.09.2007
(73) Patentinhaber: Nokia Siemens Networks GmbH & Co. KG, 81541 München (DE)
(72) Erfinder: Jordan, Markus, 45357 Essen (DE); Klein, Axel, 81737 München (DE); Schmitt, Lars, 52062 Aachen (DE); Viering, Ingo, Dr., 81539 München (DE)

(56) Entgegenhaltungen:
- EP-A- 1 365 610
- GB-A- 2 390 778
- US-A- 5 894 598
- US-A1- 2003 227 409

## Beschreibung

Die Erfindung betrifft ein Verfahren zur Steuerung einer Funkübertragung zwischen Funkstationen gemäß dem Oberbegriff des Patentanspruchs 1.

Mit Hilfe von sendeseitig eingesetzten Beamforming-Verfahren, die mit Hilfe einer so genannten SMART-Antennenanordnung realisierbar sind, werden Empfangsverbesserungen von übertragenen Signalen erreicht.

Im Allgemeinen werden seitens einer Basisstation Beamforming-Verfahren im Downlink verwendet, um an mobilen Funkkommunikationsendgeräten Empfangsversbesserungen zu erreichen.

Dabei ist es bekannt, in Abhängigkeit von einer jeweiligen Winkelposition Gruppen aus Funkkommunikationsendgeräten zu bilden, wobei dann eine einzelne Gruppe durch ein gerichtetes Strahlungsdiagramm funkversorgt werden kann.

Je nach Auflösung bzw. Breite der zur Funkversorgung von Gruppen verwendeten Strahlungsdiagramme ist es aufgrund deren räumlicher Ausrichtung möglich, mit gleichen Funkübertragungsressourcen (wie Trägerfrequenz, Zeitschlitz, Code, etc.) eine vergleichsweise hohe Anzahl an Funkkommunikationsendgeräten per Funk zu versorgen. Durch die Auflösung, Breite und räumliche Ausrichtung der Strahlungsdiagramme ist es möglich, trotz Verwendung gleicher Funkübertragungsressourcen störenden Interferenzsignale im Funkkommunikationssystem durch die gerichtete Übertragung zu reduzieren.

Für den verbesserten Einsatz von Beamforming-Verfahren ist es notwendig, die Winkelpositionen von empfangenden Funkstationen, die durch eine sendende Funkstation versorgt werden sollen, stets aktuell zu kennen.

Insbesondere bei einem Mobilfunksystem, bei dem sich Positionen von mobilen Endgeräte schnell ändern können, ist eine schnelle Detektion von Positionsänderungen notwendig, um gegebenenfalls ein versorgendes Strahlungsdiagramm nachführen zu können oder um eine neue Zuordnung eines Endgeräts zu einem Strahlungsdiagramm durchzuführen. Dadurch wird ermöglicht, dass eine bestehende Funkverbindungen zwischen einer sendenden Funkstation, beispielsweise einer Basisstation, und einer empfangenden Funkstation, beispielsweise einem Endgerät, nicht abreißen zu lassen.

US-A-5 894 598 beschreibt ein Verfahren wobei jedem Strahl einer Antenne eine Kennung mitgegeben wird, und wobei die Mobilstation nach Messung und Auswahl die Kennung des besten Strahls der Basistation mitteilt und dieser zur Übertragung genutzt wird.

Derzeit werden so genannte "Opportunistic Beamforming"-Verfahren verwendet, bei denen beispielsweise seitens einer Basisstation, die über eine geeignete Antennenanordnung verfügt, eine Funkzelle oder ein vorgegebener Winkelbereich mit Hilfe eines schwenkbaren Strahlungsdiagramms abgetastet und funkversorgt wird.

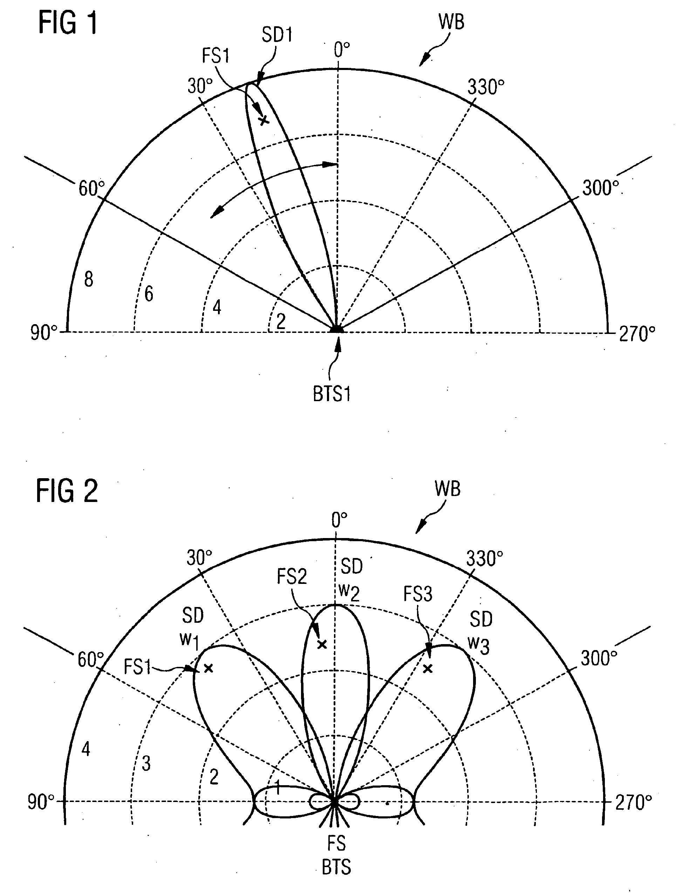

FIG 1 zeigt einen derartigen Winkelbereich WB, der beispielsweise als 120°-Sektor einer Funkzelle ausgebildet ist. Mit Hilfe eines adaptiven Strahlformungsverfahrens wird - im Allgemeinen unter Verwendung einer digitalen Signalverarbeitung im Basisband seitens einer Basisstation BTS1 - ein drehbares Strahlungsdiagramm SD1 gebildet. Dieses Strahlungsdiagramm SD1 tastet beispielhaft den gezeigten Winkelbereich WB von 60° über 0° bis 300° ab.

Eine Funkstation FS1 bestimmt zu Messzeitpunkten Qualitätswerte, die eine zeitliche Bewertung einer Strahlungsdiagramm-Signalübertragung ermöglichen. Als Qualitätswerte sind beispielsweise gemessene "Signal-to-Interference-Noise-Ratio, SINR"-Werte verwendbar.

Wird die Funkstation FS1 durch das drehende Strahlungsdiagramm SD1 erfasst, dann wird die Funkstation FS1 einen entsprechend größeren SINR-Wert messen, als zu Zeitpunkten, an denen die Funkstation FS1 durch das drehende Strahlungsdiagramm SD1 nicht erfasst wird.

Die gemessenen SINR-Werte werden an die Basisstation BTS1 zurückgemeldet. Diese entscheidet basierend auf den zurückgemeldeten SINR-Werten, ob und wie die Basisstation BTS1 eine Funk- bzw. Datenübertragung zur Funkstation FS1 durchführt.

Wird ein entsprechend großer SINR-Wert zurückgemeldet, kann eine Funkübertragung von Daten von der Basisstation BTS1 zur Funkstation FS1 erfolgen, da diese durch das drehende Strahlungsdiagramm SD1 erfasst ist.

Wird hingegen die Funkstation FS1 durch das drehende Strahlungsdiagramm SD1 nicht erfasst, ist der zurückgemeldete SINR-Wert entsprechend klein und es würde keine Funkübertragung von Daten von der Basisstation BTS1 zur Funkstation FS1 erfolgen.

Bei einem derartigen Verfahren sind bei der Abtastung zwei gegenläufige Randbedingungen in einem zu wählenden Kompromiss zu berücksichtigen:

Einerseits sollte die Abtastung der Funkzelle möglichst schnell erfolgen, um jede Funkstation regelmäßig mit Daten versorgen zu können. Eine zu langsam vorgenommene Drehung des Strahlungsdiagramms könnte beispielsweise hinsichtlich eines einzuhaltenden "Quality of Service, QoS"-Wertes zu unerwünschten zeitlichen Lücken in der Funkversorgung der Funkstation führen.

Andererseits benötigt jede Funkstation eine bestimmte Messzeit zur Bestimmung des Qualitätswerts und zur Zurückmeldung des Qualitätswerts an die Funkstation, die die Drehung des abtastenden Strahlungsdiagramms ausführt. Zur Auswertung der zurückgemeldeten Qualitätswerte wird dort außerdem Verarbeitungszeit benötigt.

Diese benötigten Zeiten stehen einer Beschleunigung der Drehung des Strahlungsdiagramms entgegen.

Bei einer zu schnellen Drehung könnten zurückgemeldete SINR-Werte, in deren Abhängigkeit die Funkübertragung festgelegt wird, bereits veraltet sein und eine effektive Datenübertragung nachteilig beeinflussen.

Es ist daher Aufgabe der vorliegenden Erfindung, ein verbessertes Verfahren zur Steuerung einer schnellen und effektiven Funkübertragung zwischen Funkstationen anzugeben.

Diese Aufgabe wird durch die Merkmale des Patentanspruchs 1 gelöst. Vorteilhafte Weiterbildungen sind in den Unteransprüchen angegeben.

Beim erfindungsgemäßen Verfahren zur Steuerung einer Funkübertragung zwischen Funkstationen wird zumindest ein Strahlungsdiagramm seitens einer ersten Funkstation gebildet, das zur Abtastung eines vorgegebenen Winkelbereichs gedreht wird. Funkstationen des Winkelbereichs bestimmen jeweilige Qualitätswerte, die zur zeitlichen Bewertung einer Strahlungsdiagramm-Signalübertragung verwendbar sind. Die Qualitätswerte werden zur Auswertung an die erste Funkstation zurückgemeldet.

Zu einem ersten Zeitpunkt einer Drehung wird eine zweite Funkstation durch das drehende Strahlungsdiagramm erfasst, wobei dem ersten Zeitpunkt eine erste Winkelposition des Strahlungsdiagramms zuordenbar ist. Die zweite Funkstation bestimmt einen ersten Qualitätswert, der der ersten Winkelposition zuordenbar ist und meldet diesen an die erste Funkstation zurück.

Der erste Qualitätswert liegt zu einem zweiten Zeitpunkt an der ersten Funkstation zur Auswertung vor, wobei dem zweiten Zeitpunkt eine zweite Winkelposition des Strahlungsdiagramms zuordenbar ist.

Die erste Funkstation steuert die Drehgeschwindigkeit des Strahlungsdiagramms für nachfolgende Drehungen derart, dass die erste Winkelposition der zweiten Winkelposition entspricht.

Die zweite Funkstation bestimmt die Qualitätswerte bevorzugt kontinuierlich, um die zeitliche Bewertung der Strahlungsdiagramm-Signalübertragung zu ermöglichen.

Seitens der ersten Funkstation ist eine gesamte Zeitdauer bekannt, die sich zusammensetzt aus:
- einer zur Bestimmung des Qualitätswerts bei der zweiten Funkstation benötigten Zeitdauer,
- einer zur Übermittlung bzw. Rückmeldung des Qualitätswerts von der zweiten zur ersten Funkstation benötigten Zeitdauer, und
- einer seitens der ersten Funkstation zur Auswertung der zurückgemeldeten Qualitätswerte benötigten Zeitdauer.

Die benötigte Zeitdauer zur Qualitätswertbestimmung und zur Zurückmeldung des Qualitätswerts ist bei allen beteiligten Funkstationen des abgetasteten Winkelbereichs nahezu gleich und kann daher leicht berücksichtigt werden.

Aufgrund der gesteuerten Drehgeschwindigkeit ist die Winkelposition des Strahlungsdiagramms nach den oben genannten Zeitdauern exakt dieselbe.

Führt die erste Funkstation basierend auf der Meldung eines als Qualitätswert verwendeten "großen" SINR-Werts eine Funkübertragung an die zweite Funkstation durch, so ist durch das erfindungsgemäße Verfahren sichergestellt, dass das Strahlungsdiagramm in die gleiche Winkelposition zeigt wie zum Zeitpunkt der Messung des großen SINR-Werts.

Dadurch wird ermöglicht, dass ein tatsächlicher Qualitätswert nahezu gleich einer zugrunde liegenden Messung ist.

Das erfindungsgemäße Verfahren ermöglicht ein schnelles Abtasten des vorgegebenen Winkelbereichs, ohne dass dabei das eingangs beschriebene Problem veralteter Qualitätswert-Messungen besteht.

In einer vorteilhaften Weiterbildung werden für eine beschleunigte Abtastung mehrere Strahlungsdiagramme verwendet, die zeitgleich aber zueinander versetzt gedreht werden.

In einer bevorzugten Weiterbildung werden zur Abtastung von Randbereichen des vorgegebenen Winkelbereichs unterschiedliche Drehgeschwindigkeiten des abtastenden Strahlungsdiagramms verwendet.

Nachfolgend wird die Erfindung anhand einer Figur näher erläutert. Dabei zeigt:
- FIG 1: die eingangs beschriebene Abtastung eines Winkelbereichs gemäß dem Stand der Technik,
- FIG 2: das erfindungsgemäßen Verfahren zur Abtastung eines vorgegebenen Winkelbereichs,
- FIG 3: einen auf FIG 2 bezogenen zeitlichen Verlauf des erfindungsgemäßen Verfahrens,
- FIG 4: eine vorteilhafte Weiterbildung des erfindungsgemäßen Verfahrens mit mehreren Strahlungsdiagrammen, die zueinander versetzt zur Abtastung gedreht werden,
- FIG 5: eine vorteilhafte Weiterbildung des erfindungsgemäßen Verfahrens mit verschiedenen Drehgeschwindigkeiten des Strahlungsdiagramms,
- FIG 6: einen auf FIG 5 bezogenen, vergleichenden zeitlichen Verlauf von Abtastungen,
- FIG 7: eine auf FIG 4 und FIG 5 bezogene vorteilhafte Weiterbildung des erfindungsgemäßen Verfahrens, bei der mehrere Strahlungsdiagramme zueinander versetzt zur Abtastung gedreht werden,
- FIG 8: eine auf FIG 7 bezogene Aufteilung in jeweilige Sektoren für unterschiedliche Strahlungsdiagramm-Anzahlen,

FIG 2 zeigt das erfindungsgemäße Verfahren zur Abtastung eines vorgegebenen Winkelbereichs WB.

Zu einem ersten Zeitpunkt Time=1 wird von einem Winkelbereich WB, der sich von 60° über 0° bis 300° erstreckt, ein erster Teilbereich mit Hilfe eines als w1 bezeichneten Strahlungsdiagramms SD abgetastet.

Zu einem zweiten Zeitpunkt Time=2 wird vom Winkelbereich WB ein zweiter Teilbereich mit Hilfe des als w2 bezeichneten Strahlungsdiagramms SD, das im Bezug zum Strahlungsdiagramm SD = w1 um ca. 40° gedreht ist, abgetastet.

Zu einem dritten Zeitpunkt Time=3 wird vom Winkelbereich WB ein dritter Teilbereich mit Hilfe des als w3 bezeichneten Strahlungsdiagramms SD, das im Bezug zum Strahlungsdiagramm SD = w2 um ca. 40° gedreht ist, abgetastet.

Das Strahlungsdiagramm SD zum jeweiligen Zeitpunkt Time wird seitens einer Funkstation FS gebildet, die hier beispielhaft als Basisstation BTS eines Mobilfunksystems ausgebildet ist.

Den genannten Strahlungsdiagrammen SD=w1 bis SD=w3 sind jeweilige Winkelpositionen zuordenbar: so zeigt das Strahlungsdiagramm SD=w1 von der Basisstation BTS aus betrachtet in eine 45°Richtung, während das Strahlungsdiagramm SD=w2 in eine 0°Richtung und das Strahlungsdiagramm SD=w3 in eine 315°Richtung zeigt.

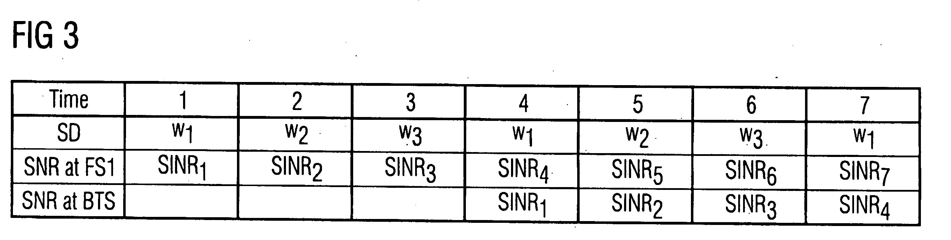

FIG 3 zeigt den auf FIG 2 bezogenen zeitlichen Verlauf des erfindungsgemäßen Verfahrens.

Zu einem ersten Zeitpunkt Time=1 wird beispielsweise ein erstes Strahlungsdiagramm SD=w1 ausgebildet. Die erste Funkstation FS1 wird durch das Strahlungsdiagramm SD=w1 erfasst.

Zum einem zweiten Zeitpunkt Time=2 wird ein zweites Strahlungsdiagramm SD=w2 gebildet, das die erste Funkstation FS1 nicht erfasst, das jedoch eine zweite Funkstation FS2 erfasst.

Entsprechend wird zum einem dritten Zeitpunkt Time=3 ein drittes Strahlungsdiagramm SD=w3 gebildet, das die erste Funkstation FS1 nicht erfasst, das jedoch eine dritte Funkstation FS3 erfasst.

Die Bildung der Strahlungsdiagramme SD wiederholt sich für nachfolgende Zeitpunkte Time=4 bis Time=7 entsprechend.

Die Funkstation FS1 bestimmt zu den genannten Zeitpunkten Time=1 bis Time=7 zuordenbare Qualitätswerte, hier jeweilige SNR-Werte SINR1 bis SINR7. Diese Qualitätswerte SINR1 bis SINR7 ermöglichen eine zeitliche Bewertung einer Signalübertragung durch das Strahlungsdiagramm SD.

Die Qualitätswerte SINR1 bis SINR7 werden von der Funkstation FS1 an die Basisstation BTS zurückgemeldet.

Seitens der Basisstation BTS erfolgt eine Auswertung der zurückgemeldeten Qualitätswerte SINR1 bis SINR7.

Seitens der Basisstation BTS ist eine gesamte Zeitdauer bekannt, die sich zusammensetzt aus:
- der zur Bestimmung des Qualitätswerts bei der Funkstation FS1 benötigten Zeitdauer,
- der zur Übermittlung bzw. Rückmeldung des jeweiligen Qualitätswerts SINR von der Funkstation FS1 zur Basisstation BTS benötigten Zeitdauer, und
- der seitens der Basisstation BTS zur Auswertung der zurückgemeldeten Qualitätswerte benötigten Zeitdauer.

Hier entspricht diese gesamte Zeitdauer dem Unterschied zwischen Time=1 und Time=3, also einem Wert von drei Zeitdauern mit Bezug auf Zeitpunkte "Time".

Seitens der Basisstation BTS erfolgt die Bestimmung der Drehbewegung derart, dass die Winkelposition w des Strahlungsdiagramms SD nach den oben genannten Zeitdauern exakt dieselbe ist.

Führt die Basisstation basierend auf der Meldung eines großen gemessenen SINR-Werts eine Funkübertragung an die Funkstation FS1 durch, so ist dadurch sichergestellt, dass das Strahlungsdiagramm SD=w1 in die gleiche Winkelposition w1 zeigt wie zum Zeitpunkt der Messung des großen SINR-Werts, die seitens der Funkstation FS1 erfolgt.

Somit wird der tatsächliche Qualitätswert SINR4 im wesentlichen gleich zum zugrunde liegenden, bemessenen Wert SINR1 sein.

Gemäß der gezeigten Tabelle wird die Drehgeschwindigkeit des Strahlungsdiagramms SD derart geregelt, dass zu einem Zeitpunkt Time=4 an der Funkstation FS1 entsprechend der maximale Qualitätswert SINR4 bestimmt wird.

Zum Zeitpunkt Time=4 liegt an der Basisstation BTS der Qualitätswert SINR1 vor, so dass basierend darauf die Basisstation BTS die Entscheidung treffen kann, eine Funkübertragung zur Funkstation FS1 durchzuführen. Zu genau diesem Zeitpunkt Time=4 zeigt das Strahlungsdiagramm SD wieder exakt in Richtung der Winkelposition von 45°.

Entsprechend wird zu einem Zeitpunkt Time=7 an der Funkstation FS1 erneut ein maximaler Qualitätswert SINR7 bestimmt, während seitens der Basisstation BTS der Qualitätswert SINR4 zur Steuerung der Funkübertragung vorliegt.

Zusammenfassend stehen an der Basisstation BTS die Werte SINR1 bis SINR7 jeweils 3 Zeitabschnitte, nachdem sie seitens der Funkstation FS1 bestimmt wurden, zur Verfügung.

Entsprechend liegt zu einem Zeitpunkt Time=5, zu dem das Strahlungsdiagramm SD=w2 ausgebildet wird, seitens der Basisstation BTS der zweite Qualitätswert SINR2 vor, so dass keine Funkübertragung von der Basisstation BTS zur Funkstation FS1 erfolgt.

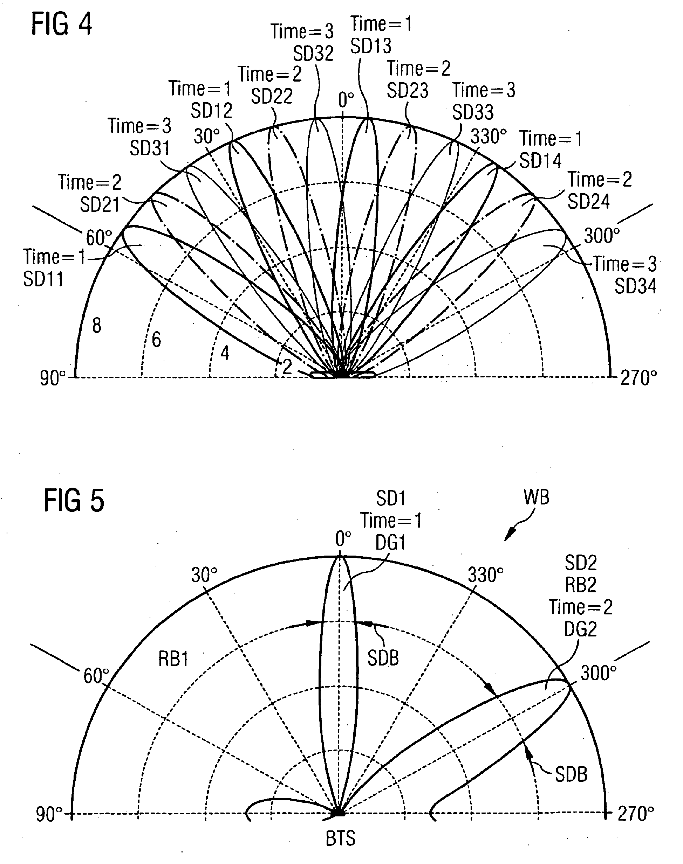

FIG 4 zeigt eine vorteilhafte Weiterbildung des erfindungsgemäßen Verfahrens, bei dem mehrere Strahlungsdiagramme SD, die zueinander räumlich versetzt sind, zur Abtastung verwendet werden.

Zu einem ersten Zeitpunkt Time=1 werden vier Strahlungsdiagramme SD11, SD12, SD13 und SD14 gleichzeitig gebildet, während zu einem nachfolgenden zweiten Zeitpunkt Time=2 vier Strahlungsdiagramme SD21, SD22, SD23 und SD24 gleichzeitig gebildet werden.

Entsprechend werden zu einem dem ersten Zeitpunkt Time=1 und dem zweiten Zeitpunkt Time=2 nachfolgenden dritten Zeitpunkt Time=3 vier Strahlungsdiagramme SD31, SD32, SD33 und SD34 gleichzeitig gebildet.

Das Strahlungsdiagramm SD11 ist bezogen auf das Strahlungsdiagramm SD12 um ca. 30° verdreht. Dieser Versatz um 30° gilt entsprechend zwischen den Strahlungsdiagrammen SD12 und SD13 bzw. SD13 und SD14.

Das Strahlungsdiagramm SD21 ist bezogen auf das Strahlungsdiagramm SD22 um ca. 30° verdreht. Dieser Versatz um 30° gilt entsprechend zwischen den Strahlungsdiagrammen SD22 und SD23 bzw. SD23 und SD24.

Das Strahlungsdiagramm SD31 ist bezogen auf das Strahlungsdiagramm SD32 um ca. 30° verdreht. Dieser Versatz um 30° gilt entsprechend zwischen den Strahlungsdiagrammen SD32 und SD33 bzw. SD33 und SD34.

Durch die gleichzeitige Bildung von vier Strahlungsdiagrammen SD zu einem Zeitpunkt Time wird die Abtastung des Winkelbereichs beschleunigt, es erfolgt eine vorteilhafte Drehung von vier abtastenden Strahlungsdiagrammen SD zwischen den Zeitpunkten Time.

Im Hinblick auf die Zeitpunkte Time erfolgt vom Zeitpunkt Time=1 zum Zeitpunkt Time=2 und vom Zeitpunkt Time=2 zum Zeitpunkt Time=3 eine Drehung um ca. 10° der jeweiligen Strahlungsdiagramme.

FIG 5 zeigt eine vorteilhafte Weiterbildung des erfindungsgemäßen Verfahrens mit verschiedenen Drehgeschwindigkeiten DG des Strahlungsdiagramms SD.

Der vorgegebene Winkelbereichs WB, der sich von 60° über 0° bis 300° erstreckt, weist zwei Randbereichen RB1 und RB2 auf. Dabei ist einem ersten Randbereich RB1 eine 60°-Richtung des Winkelbereichs WB zugeordnet, während einem zweiten Randbereich RB2 eine 300°-Richtung des Winkelbereichs WB zugeordnet ist.

In einer 0°-Richtung wird zu einem ersten Zeitpunkt Time=1 ein erstes Strahlungsdiagramm SD1 durch eine Basisstation BTS gebildet. Das Strahlungsdiagramm SD1 wird in Umgebung der 0°-Richtung mit einer ersten Drehgeschwindigkeit DG1 gedreht.

In der 300°-Richtung wird zu einem anderen Zeitpunkt Time=2 ein zweites Strahlungsdiagramm SD2 durch die Basisstation BTS gebildet. Das Strahlungsdiagramm SD2 wird in Umgebung der 300°-Richtung mit einer zweiten Drehgeschwindigkeit DG2 gedreht.

Die Drehgeschwindigkeit DG2 kann im Bezug auf die Drehgeschwindigkeit DG1 größer gewählt werden, da das zweite Strahlungsdiagramm SD2 eine größere Strahlungsdiagrammbreite SDB aufweist, als das erste Strahlungsdiagramm SD1.

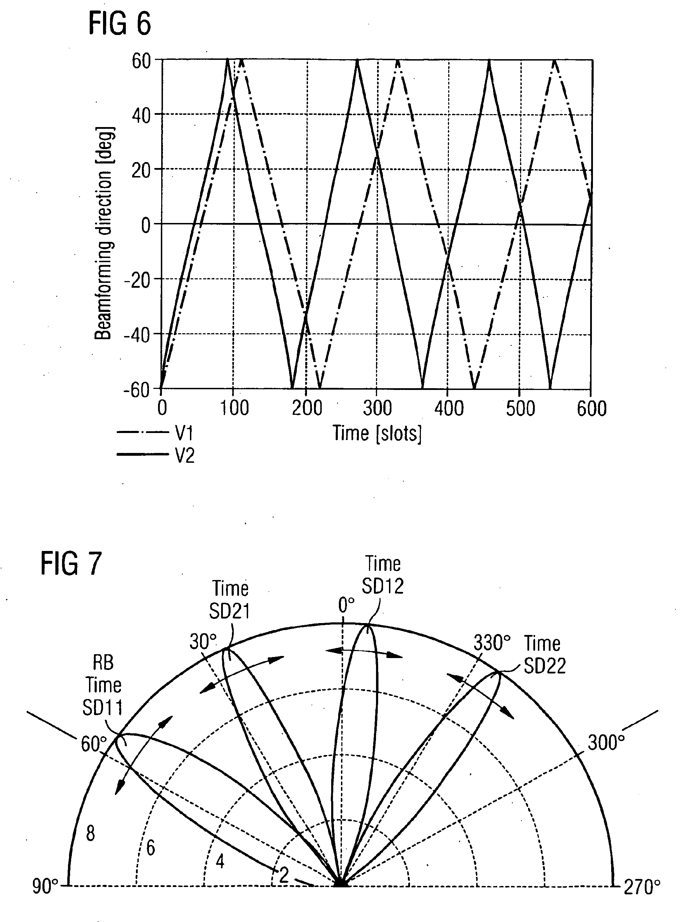

FIG 6 zeigt einen auf FIG 5 bezogenen vergleichenden zeitlichen Verlauf der Abtastung.

Dabei ist auf der horizontalen Achse die Zeit aufgetragen, während auf der vertikalen Achse eine als "Beamforming direction" bezeichnete Strahlungsdiagramm-Richtung aufgetragen ist.

Ein erster Verlauf V1 zeigt eine Abtastung eines Winkelbereichs, die mit einer einheitlichen Drehgeschwindigkeit eines Strahlungsdiagramms durchgeführt wird.

Ein zweiter Verlauf V2 zeigt eine Abtastung eines Winkelbereichs, die mit Verweis auf die Beschreibung der FIG 5 mit unterschiedlichen Drehgeschwindigkeiten des Strahlungsdiagramms erfolgt.

Zu sehen ist, dass der zweite Verlauf V2 eine schnellere Abtastung des Winkelbereichs ermöglicht als der erste Verlauf V1.

FIG 7 zeigt eine vorteilhafte Weiterbildung des erfindungsgemäßen Verfahrens, bei dem entsprechend zu FIG 4 mehrere Strahlungsdiagramme SD zueinander räumlich versetzt zur Abtastung verwendet werden.

Zu einem Zeitpunkt Time werden hier vier Strahlungsdiagramme SD11 bis SD22 gebildet, die zueinander jeweils um ca. 30° verdreht sind.

Bezug nehmend auf FIG 5 werden die beiden äußeren Strahlungsdiagramme SD 11 und SD22 schneller gedreht als die beiden Strahlungsdiagramme SD12 und SD21.

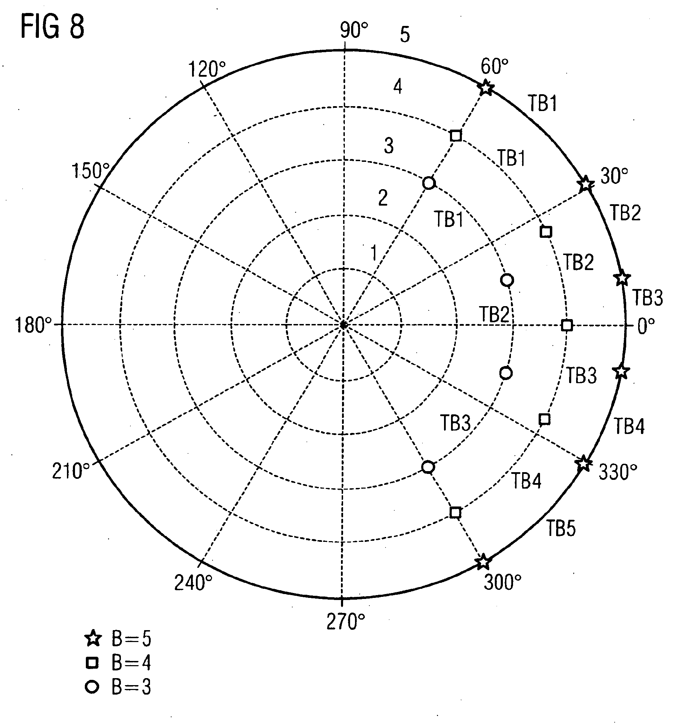

FIG 8 zeigt eine auf FIG 7 bezogene Aufteilung in jeweilige Sektoren bzw. Teilbereiche für unterschiedliche Strahlungsdiagramm-Anzahlen.

Werden zu einem Zeitpunkt Time eine Anzahl B=5 Strahlungsdiagramme gebildet, ergeben sich fünf abzutastende Teilbereiche, wobei:
- sich ein erster Teilbereich TB1 von 60° bis 32° erstreckt,
- sich ein zweiter Teilbereich TB2 von 32° bis 8° erstreckt,
- sich ein dritter Teilbereich TB3 von 8° über 0° bis 352° erstreckt,
- sich ein vierter Teilbereich TB4 von 352° bis 328° erstreckt, und
- sich ein fünfter Teilbereich TB5 von 330° bis 300° erstreckt.

Werden zu einem Zeitpunkt Time eine Anzahl B=4 Strahlungsdiagramme gebildet, ergeben sich vier abzutastende Teilbereiche, wobei:
- sich ein erster Teilbereich TB1 von 60° bis 25° erstreckt,
- sich ein zweiter Teilbereich TB2 von 25° bis 0° erstreckt,
- sich ein dritter Teilbereich TB3 von 0° bis 335° erstreckt, und
- sich ein vierter Teilbereich TB4 von 335° bis 300° erstreckt.

Werden zu einem Zeitpunkt Time eine Anzahl B=3 Strahlungsdiagramme gebildet, ergeben sich drei abzutastende Teilbereiche, wobei:
- sich ein erster Teilbereich TB1 von 60° bis 20° erstreckt,
- sich ein zweiter Teilbereich TB2 von 20° über 0° bis 240° erstreckt, und
- sich ein dritter Teilbereich TB3 von 240° bis 300° erstreckt.

Zu sehen ist, dass bei jeder der drei Auflösungen die jeweiligen Teilbereiche im Abschnitt der 0°-Richtung schmäler sind als diejenigen Teilbereiche, die den beiden Randbereichen in 300°-Richtung und in 60°-Richtung zugeordnet sind.

Die Anpassung der genannten Sektorgrenzen erfolgt, um die Strahlungsdiagramme synchron schwenken zu können.

## Patentansprüche

1. Verfahren zur Steuerung einer Funkübertragung zwischen Funkstationen (BTS1, FS1),
- bei dem zumindest ein Strahlungsdiagramm (SD) seitens einer ersten Funkstation (BTS1) gebildet wird,
- bei dem das Strahlungsdiagramm (SD) zur Abtastung eines vorgegebenen Winkelbereichs (WB) gedreht wird,
- bei dem Funkstationen (FS1) des Winkelbereichs (WB) jeweilige Qualitätswerte (SINR) bestimmen, die zur zeitlichen Bewertung einer Strahlungsdiagramm-Signalübertragung verwendbar sind, und die Qualitätswerte (SINR) zur Auswertung an die erste Funkstation (BTS) zurückmelden,
**dadurch gekennzeichnet,**
- **dass** zu einem ersten Zeitpunkt (Time=1) einer Drehung eine zweite Funkstation (FS1) durch das drehende Strahlungsdiagramm (SD) erfasst wird, wobei diesem ersten Zeitpunkt (Time=1) eine erste Winkelposition (w1) des Strahlungsdiagramms (SD) zuordenbar ist,
- **dass** die zweite Funkstation (FS1) einen ersten Qualitätswert (SINR1), der der ersten Winkelposition (w1) zuordenbar ist, bestimmt und diesen an die erste Funkstation (BTS) zurückmeldet,
- **dass** der erste Qualitätswert (SINR1) zu einem zweiten Zeitpunkt (Time=4) an der ersten Funkstation (BTS) zur Auswertung vorliegt, wobei dem zweiten Zeitpunkt (Time=4) eine zweite Winkelposition (w1) des Strahlungsdiagramms (SD) zuordenbar ist, und
- **dass** die erste Funkstation (BTS) die Drehgeschwindigkeit des Strahlungsdiagramms (SD) für nachfolgende Drehungen derart steuert, dass die erste Winkelposition (w1) der zweiten Winkelposition (w1) entspricht.

2. Verfahren nach Anspruch 1, **dadurch gekennzeichnet, dass** mehrere Strahlungsdiagramme (SD11, SD12, SD13, SD14) gleichzeitig gebildet und zur Abtastung des Winkelbereichs (WB) gedreht werden.

3. Verfahren nach Anspruch 1 oder 2, bei dem die Drehgeschwindigkeit des zumindest einen abtastenden Strahlungsdiagramms (SD) in Abhängigkeit von vorgegebenen Teilbereichen des Winkelbereichs (WB) gewählt wird.

4. Verfahren nach Anspruch 3, bei dem die Drehung des zumindest einen abtastenden Strahlungsdiagramms (SD) in Randbereichen des Winkelbereichs schneller erfolgt als in zentralen Bereichen.

5. Verfahren nach Anspruch 3 oder 4, bei dem der Winkelbereich (WB) in Sektoren unterteilt wird, deren Sektorbreite in Abhängigkeit der Drehgeschwindigkeit bestimmt wird.

6. Verfahren nach einem der vorhergehenden Ansprüchen, bei dem der zweite Zeitpunkt durch die gewählte Drehgeschwindigkeit und durch eine gesamte Zeitdauer bestimmt wird, die aus einer ersten Zeitdauer zur Bestimmung der Qualitätswerte und einer zweiten Zeitdauer zur Zurückmeldung der Qualitätswerte und einer dritten Zeitdauer zur Auswertung der Qualitätswerte ermittelt wird.

## Claims

1. Method for controlling a radio transmission between radio stations (BTS1, FS1),
- in which at least one radiation diagram (SD) is formed at a first radio station (BTS1),
- in which the radiation diagram (SD) is rotated in order to scan a predefined angle area (WB),
- in which radio stations (FS1) of the angle area (WB) define respective quality values (SINR) which can be used for the temporal evaluation of radiation diagram signal transmission and report back the quality values (SINR) to the first radio station (BTS) for evaluation,
**characterized in that,**
- at a first time (Time=1) of a rotation, a second radio station (FS1) is covered by the rotating radiation diagram (SD), whereby a first angle position (w1) of the radiation diagram (SD) can be assigned to this first time (Time=1),
- the second radio station (FS1) defines a first quality value (SINR1) which can be assigned to the first angle position (w1) and reports this back to the first radio station (BTS),
- the first quality value (SINR1) is present at a second time (Time=4) at the first radio station (BTS) for evaluation, whereby a second angle position (w2) of the radiation diagram (SD) can be assigned to the second time (Time=4), and
- the first radio station (BTS) controls the rotational speed of the radiation diagram (SD) for subsequent rotations in such a way that the first angle position (w1) corresponds to the second angle position (w2).

2. Method according to Claim 1, **characterized in that** a plurality of radiation diagrams (SD11, SD12, SD13, SD14) are formed simultaneously and are rotated in order to scan the angle area (WB).

3. Method according to Claim 1 or 2, in which the rotational speed of the at least one scanning radiation diagram (SD) is selected depending on predefined part areas of the angle area (WB).

4. Method according to Claim 3, in which the rotation of the at least one scanning radiation diagram (SD) is carried out more quickly in peripheral areas of the angle area than in central areas.

5. Method according to Claim 3 or 4, in which the angle area (WB) is subdivided into sectors, the sector width of which is defined depending on the rotational speed.

6. Method according to one of the preceding claims, in which the second time is defined by the selected rotational speed and by a total time duration which is determined from a first time duration for defining the quality values and a second time duration for reporting back the quality values and a third time duration for evaluating the quality values.

## Revendications

1. Procédé pour commander une transmission radio entre des stations radio (BTS1, FS1), dans lequel
- au moins un diagramme de rayonnement (SD) est constitué du côté d'une première station radio (BTS1),
- le diagramme de rayonnement (SD) subit une rotation aux fins du balayage d'une plage angulaire prédéterminée (WB),
- des stations radio (FS1) de la plage angulaire (WB) déterminent des valeurs de qualité (SINR) respectives utilisables aux fins de l'évaluation temporelle d'une transmission de signal de diagramme de rayonnement et signalent les valeurs de qualité (SINR) en retour à la première station radio (BTS) pour évaluation,
**caractérisé en ce que**
- à un premier instant (Time = 1) d'une rotation, une deuxième station radio (FS1) est détectée par le diagramme de rayonnement tournant (SD), une première position angulaire (w1) du diagramme de rayonnement (SD) pouvant être associée à ce premier instant (Time = 1),
- la deuxième station radio (FS1) détermine une première valeur de qualité (SINR1) qui peut être associée à la première position angulaire (w1) et signale ladite valeur en retour à la première station radio (BTS),
- on a la première valeur de qualité (SINR1) à un deuxième instant (Time = 4) à la première station radio (BTS) pour évaluation, une deuxième position angulaire (w1) du diagramme de rayonnement (SD) pouvant être associée au deuxième instant (Time = 4) et
- la première station radio (BTS) commande la vitesse de rotation du diagramme de rayonnement (SD) pour des rotations subséquentes de manière telle que la première position angulaire (w1) corresponde à la deuxième position angulaire (w1).

2. Procédé selon la revendication 1, **caractérisé en ce que** plusieurs diagrammes de rayonnement (SD11, SD12, SD13, SD14) sont constitués simultanément et subissent une rotation aux fins du balayage de la plage angulaire (WB).

3. Procédé selon la revendication 1 ou 2, dans lequel la vitesse de rotation de l'au moins un diagramme de rayonnement de balayage (SD) étant choisie en fonction de sous-plages prédéterminées de la plage angulaire (WB).

4. Procédé selon la revendication 3, dans lequel la rotation de l'au moins un diagramme de rayonnement de balayage (SD) est plus rapide dans des zones de bord de la plage angulaire que dans des zones centrales.

5. Procédé selon la revendication 3 ou 4, dans lequel la plage angulaire (WB) est subdivisée en secteurs dont la largeur est définie en fonction de la vitesse de rotation.

6. Procédé selon l'une des revendications précédentes, dans lequel le deuxième instant est déterminé par la vitesse de rotation sélectionnée et par une durée temporelle totale qui est établie à partir d'une première durée temporelle pour la détermination des valeurs de qualité et d'une deuxième durée temporelle pour la signalisation en retour des valeurs de qualité et d'une troisième durée temporelle pour l'évaluation des valeurs de qualité.
